# EUROPEAN PATENT APPLICATION

(11) **EP 4 732 654 A1**
(43) Date of publication of application: **29.04.2026**
(21) Application number: 25203052.3
(22) Date of filing: 18.09.2025
(51) Int. Cl.: A01C 7/08, A01C 7/12

(54) **VOLUMETRIC METER**

(30) Priority: 23.10.2024 US 202418924495
(71) Applicant: Deere & Company, Moline, IL 61265 (US)
(72) Inventor: Bush, Ean M., Mannheim (DE); Cherry, Brandon, Mannheim (DE); Brendan, Kuhns, Mannheim (DE); Bates, Francisco, Mannheim (DE)
(74) Representative: Reichert, Christian

(57) **Abstract**

A volumetric meter (104, 200) for metering an agricultural commodity is disclosed. The volumetric meter (104, 200) comprising: a roller housing (118) having an inlet (116), an outlet (150), and a housing aperture (236), the housing aperture (236) being in fluid communication with the inlet (116) and the outlet (150); a roller (124) positioned in the housing aperture (236), the roller (124) having a plurality of flutes (126) and a plurality of chambers (138), each flute (126) of the plurality of flutes (126) radially outwardly extends to an apex (132) of the flute (126), at least a pair of flutes (126) defining at least a portion of a chamber (138) of the plurality of chambers (138), the plurality of chambers (138) configured for receipt of at least a portion of the agricultural commodity from the inlet (116) of the roller housing (118); and a sweep assembly (202, 202') comprising a sweeper body (238) positioned at least in the inlet (116) of the roller housing (118), the sweeper body (238) having a sweeper portion (239) having a compliant configuration that is at least partially displaceable by a force exerted against the sweeper portion (239) by at least a portion of the agricultural commodity in the inlet (116) of the roller housing (118).

## Description

### FIELD OF THE DISCLOSURE

The present disclosure generally relates to volumetric meters used in agricultural operations, and, more specifically, to volumetric meters adapted to protect commodities from damage during at least transport of the commodity along a meter roller.

### BACKGROUND

Volumetric metering systems are used in the agricultural industry to apply a controlled amount of a commodity in the form of solid particles, such as, for example, seed or fertilizer, to an agricultural surface. Moreover, such metering systems can be utilized to control a distribution of the commodity, including either or both a distribution amount and a rate of distribution of the commodity. With respect to seeding operations, such metering systems can assist in preventing waste of seed that can be associated with over-seeding, while also preventing or minimizing lower plant yields that can be associated with under-seeding. With respect to fertilizers, such metering systems can prevent plant damage that can be attributed to over-application of fertilizer, while also preventing issues with the efficacy of the application that can be attributed to under-application of the fertilizer.

### SUMMARY

The present disclosure may comprise one or more of the following features and combinations thereof.

In one embodiment of the present disclosure, a volumetric meter is provided for metering an agricultural commodity. The volumetric meter can include a roller housing having an inlet, an outlet, and a housing aperture. The housing aperture can be in fluid communication with the inlet and the outlet. The volumetric meter can also include a roller that can be positioned in the housing aperture. The roller can have a plurality of flutes and a plurality of chambers. Each flute of the plurality of flutes can radially outwardly extend to an apex of the flute. At least a pair of flutes can define at least a portion a chamber of the plurality of chambers. The plurality of chambers can be configured for receipt of at least a portion of the agricultural commodity from the inlet of the roller housing. Additionally, the volumetric meter can include a sweep assembly that can comprise a sweeper body that can be positioned at least in the inlet of the roller housing. The sweeper body can have a sweeper portion having a compliant configuration that is at least partially displaceable by a force exerted against the sweeper portion by at least a portion of the agricultural commodity in the inlet of the roller housing.

Additionally, according to another embodiment, a volumetric meter is provided for metering an agricultural commodity. The volumetric meter can include a roller that can be housed in a housing aperture of a roller housing at a location at which at least a portion of the agricultural commodity can be transferred through an inlet of the roller housing to one or more chambers of the roller via at least a gravitational force. Additionally, the roller can have a plurality of flutes. The volumetric meter can also include a sweep assembly that can comprise a sweeper body that can be positioned at least in the inlet of the roller housing and adjacent to the housing aperture. The sweeper body can have a sweeper portion having a compliant configuration that is configured for at least one of being displaced, bent, deflected, or deformed in response to a force exerted against the sweeper portion in the inlet of the roller housing as the portion of the agricultural commodity transferred into the one or more chambers is displaced with a rotation of the roller within the housing aperture. These and other features of the present disclosure will become more apparent from the following description of the illustrative embodiments.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates a side view of an exemplary seeder coupled to an agricultural vehicle.
Figure 2 illustrates a simplified schematic representation of an exemplary meter assembly.
Figure 3 illustrates an exploded view of an exemplary meter having a sweep assembly.
Figure 4 illustrates a perspective front side view of a portion of the exploded view of exemplary meter shown in Figure 3.
Figure 5 illustrates a top view of the meter shown in Figure 3.
Figures 6A and 6B illustrate front views of different exemplary embodiments of a sweep assembly.
Figure 6C illustrates a cross sectional view of a sweep assembly having a sweeper portion that is a living hinge.
Figure 6D illustrates a front view of another exemplary embodiment of a sweep assembly.
Figure 7 illustrates a cross-sectional view of the meter shown in Figure 3 in an assembled state.
Figure 8 illustrates a cross-sectional view of the meter shown in Figure 3 having another embodiment of a sweep assembly.
Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

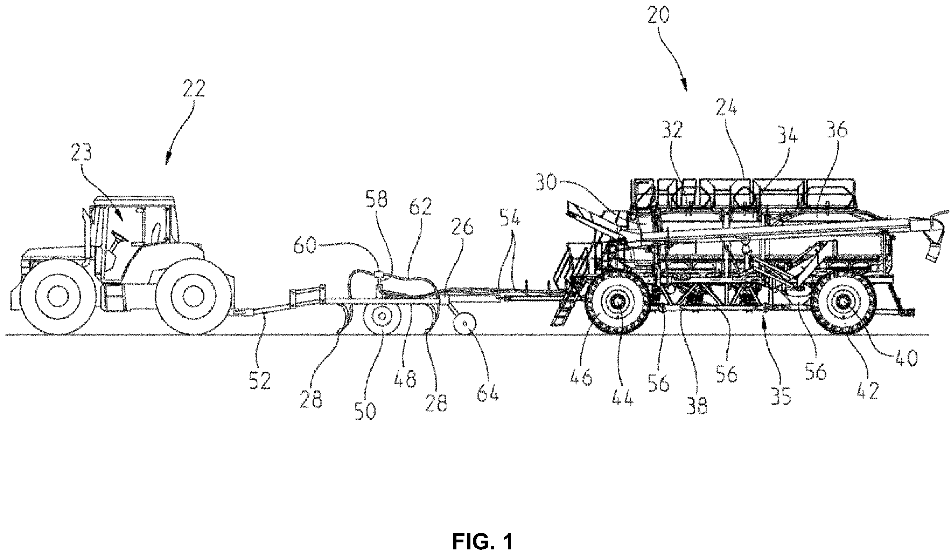

Figure 1 illustrates an exemplary seeder 20 coupled to an agricultural vehicle 22. In the illustrated embodiment, the seeder 20, such as, for example, an air or pneumatic seeder, is being pulled or towed by the agricultural vehicle 22. However, the seeder 20 can be moved in a variety of other manners, including pushed. Additionally, according to certain embodiments, the seeder 20 can be self propelled, and, alternatively, can be an autonomous vehicle. Further, while agricultural vehicle 22 is illustrated in Figure 1 as a tractor, a variety of other types of vehicles, including, but not limited to, autonomous vehicles, can be utilized as the agricultural vehicle 22. The exemplary seeder 20 can include a cart 24, also known as a commodity cart. The term "cart" can be broadly construed, and can include a device that is supported on one or more axles, such as, for example, a trailer, wagon, or implement, among others, and which can be moved by operation of another vehicle or, alternatively, can be an autonomous vehicle.

In the illustrated embodiment in which the cart 24 is an air cart, the cart 24 can include one or more tanks 30, 32, 34, 36, or other suitable devices for holding a commodity, such as, for example, a seed or fertilizer, that is to be distributed to the soil. The tanks 30, 32, 34, 36 can have a variety of different configurations, including, for example, hoppers, bins, boxes, or containers, among others. Additionally, or alternatively, one or more tanks 30, 32, 34, 36 can have multiple compartments for storage of the commodity. As seen in Figure 1, in the illustrated example, the cart 24 has a plurality of tanks 30, 32, 34, 36 that are mounted on a frame 38 of the cart 24.

The frame 38 can be supported on one or more axles, such as, for example, a rear axle 40 and a front axle 44 of the cart 24. Each axle 40, 44 can be coupled to a ground engagement bodies, such as, for example, tracks, wheels, or tires. In the illustrated example, the rear axle 40 is depicted as being coupled to rear wheels 42, and a front axle 44 is coupled to front wheels 46. The axles 40, 44, and the associated wheels 42, 46, can support at least the frame 38 for movement of the frame 38, and thus the cart 24, over the ground surface as the seeder 20 is towed or otherwise propelled or moved along the ground surface.

The cart 24 can also include a drill or implement 26 that is configured for applying the commodity to the soil. The drill 26 can have a plurality of ground engaging tools 28. According to certain embodiments, the drill 26 can include a frame 48 that can be supported by ground wheels 50. The frame 48 can be connected to the rear of the agricultural vehicle 22 by a tongue 52. As shown, the exemplary cart 24 is depicted as a "tow behind" cart, in which the cart 24 follows the drill 26. In alternative arrangements, the cart 24 can be a "tow between" cart, in which the cart 24 is positioned between the agricultural vehicle 22 and the drill 26. In yet a further possible arrangement, the cart 24 and the drill 26 can be combined onto a common frame.

The cart 24 can, according to certain embodiments, include a pneumatic distribution system 35 having a fan that can be located behind the front wheels 46. The pneumatic distribution system 35 can be connected to a product delivery conduit structure having multiple product flow passages 54 through which the fan can direct air. According to certain embodiments, a meter assembly 56 is be located at the bottom of each tank 30, 32, 34, 36, and can be configured to deliver commodity from the associated tank 30, 32, 34, 36 at a controlled rate to the passages 54, and, moreover, into the air stream moving through the passages 54.

Depending on the configuration of the cart 24 and drill 26, the number of passages 54 can vary, such as, for example, from one to eight or ten passages 54, if not more. Further, each passage 54 can carry commodity in the air stream to a secondary distribution tower 58 on the drill 26. Typically, there can be one tower 58 for each passage 54. Each tower 58 can include a secondary distributing manifold 60 located at the top of a vertical tube. The distributing manifold 60 can divide the flow of commodity into several secondary distribution lines 62, each secondary distribution line 62 delivering commodity to one of a plurality of ground engaging tools 28 that opens a furrow in the ground surface and deposits the commodity therein. Depending on the configuration of the cart 24 and drill 26, there can be two distribution manifolds in the air stream between the meters of the meter assembly 56 and the ground engaging tools 28. Alternatively, in some configurations, the commodity is metered directly from the tank 30, 32, 34, 36 and into secondary distribution lines 62 that can lead to the ground engaging tools 28 without an intermediate distribution manifold.

Various types of ground engaging tools 28 can be used including, for example, tines, shanks, and disks, among others. The ground engaging tools 28 are movable between a lowered position at which the ground engaging tool 28 engages the ground, and a raised position above the ground. Additionally, each ground engaging tool 28 can be configured to be raised by a separate actuator. Alternatively, multiple ground engaging tools 28 can be mounted to a common rockshaft for movement together. In yet another alternative, the ground engaging tools 28 can be fixed to the frame 38, and the frame 38 can be raised and lowered by linkages on each of the drill wheels 50.

A firming or closing wheel 64 associated with each ground engaging tool 28 can trail the ground engaging tool 28, the closing wheel 64 being used to at least firm the soil over the commodity that has been deposited in the soil.

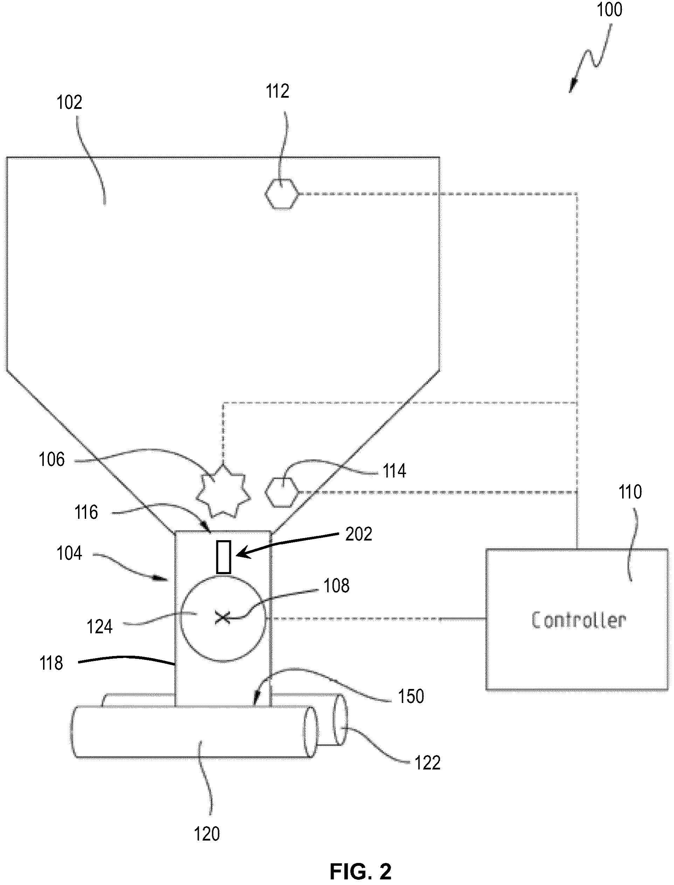

Figure 2 illustrates a simplified schematic representation of an exemplary meter assembly 100. The meter assembly 100 can include a reservoir or tank 102 coupled to a meter 104. The tank 102 may be any of the tanks 30, 32, 34, 36 discussed above with respect to Figure 1, and can be sized to contain commodity therein. The commodity may refer to seed, fertilizer, or other nutrients and the like that are related to, or promote, growing an agricultural material, such as, for example, a crop.

According to certain embodiments, the tank 102 can include an agitator 106 that can be positioned in, or on, the tank 102. The agitator 106 can be a rotary agitator having extensions that extend radially away from a rotation axis 108. The agitator 106 can interact with the tank 102, or commodity therein, to agitate commodity within the tank 102 to ensure the commodity is fed into the meter 104. The agitator 106 can have a variety of different forms, including, for example, be a rotary agitator, among other types of commodity agitators. Additionally, according to certain embodiments, operation of the agitator 106 can be selectively controlled by a controller 110, including, for example activated and deactivated in response to one or more signals generated by the controller 110.

The amount or presence of commodity in the tank 102 can, according to certain embodiments, be identified via use of through one or more sensors 112, 114. For example, according to certain embodiments, the meter assembly 100 can include a first sensor(s) 112 that is a height sensor that is positioned to identify a fill height of any commodity in the tank 102, while the second sensor 114 can be a load sensors that can be positioned to identify the weight of the tank 102 along with any commodity positioned therein.. Additionally, or alternatively, the first sensor 112 can be an ultrasonic sensor, a camera, or any other sensor that can identify the presence of commodity in the tank 102.

The tank 102, or other portion of the meter assembly 100, can be configured to direct commodity from the tank 102 to the meter 104, including to an inlet 148 of a roller housing 118 of the meter 104. The meter 104 can be representative of at least a portion of the meter assembly 56 discussed above with respect to Figure 1. Further, the meter 104 can selectively distribute commodity from the tank 102 to a first passage 120 or second passage 122. The disclosures herein are, however, applicable to meters 104 that a coupled to any number of passages 120, 122. Thus, while Figure 2 illustrates two passages, namely the first and second passages 120, 122, according to other embodiments, a single passage, or, alternatively, more than two passages can be coupled to the meter 104.

According to certain embodiments, the meter 104 can include a run selector, flapper, or the like that can be uptilted and repositioned to selectively distribute, depending on the position of the flapper, commodity from into either one of the first passage 120 or the second passage 122, among other passages.

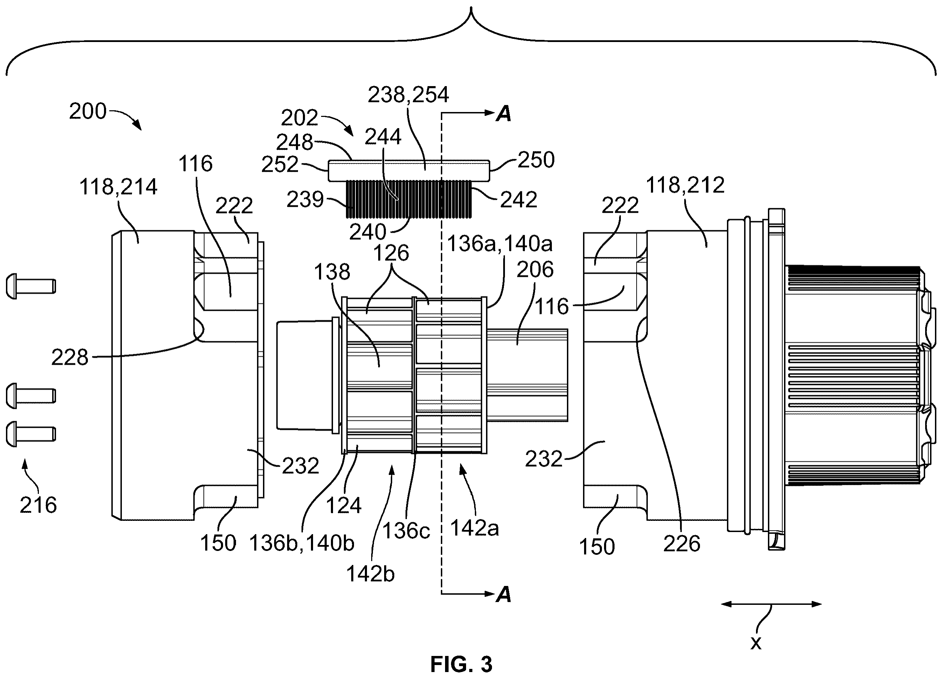

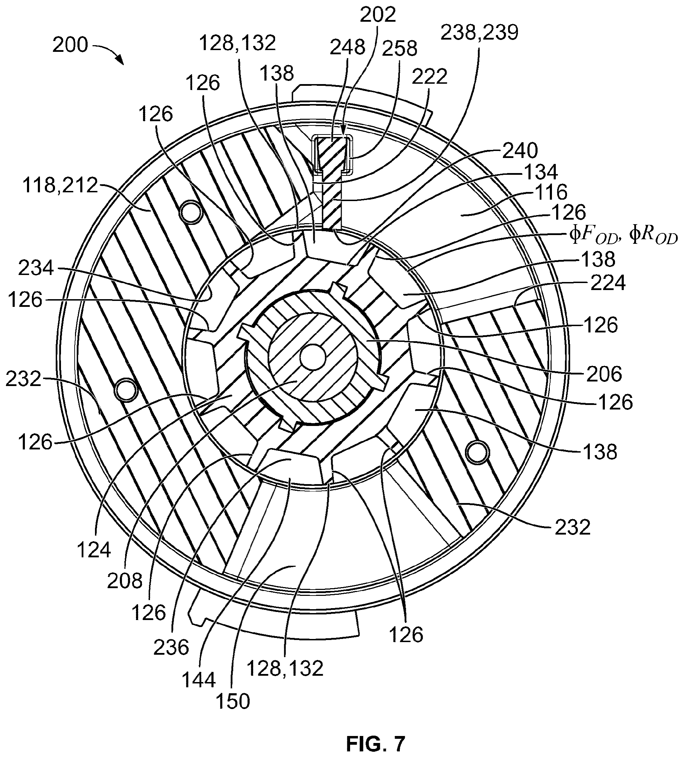

At least Figures 3-5 and 7 illustrate an exemplary embodiment of a meter 200 that can be generally similar to the meter 104 discussed above with respect to Figure 2. As shown, the meter 104 can include a roller 124 that is housed in the roller housing 118, the roller 124 being configured for selective distribution of commodity from an inlet 148 to an outlet 150 of the roller housing 118. The roller 124, which can be selectively rotated, can include a plurality of radially extending flutes 126. As seen in at least Figure 7, each flute 126 can have a distal end 128 and a proximate end 130, the distal end 128 being at an apex or upper surface 132 of the flute 126, and the proximal end 130 being at, or adjacent to, a roller base wall 134 to which the flute 126 is adjoined or otherwise outwardly radially extends. Additionally, each of the distal ends 128 or apexes 132 of the plurality of flutes 126 can be arranged to be positioned about, or define, a flute diameter (as generally indicated by "*ϕF_{OD}*" in Figure 7), and may also at least partially define, or otherwise be generally similar to, an outer diameter (as generally indicated by "*ϕR_{OD}*" in Figure 7) of the roller 124.

As seen in at least Figure 3, each flute 126 linearly extends between a pair of opposing chamber sidewalls 136a-c. According to such an embodiment, the roller 124 can include a plurality of chambers 138, each chamber 138 being generally defined by opposing pairs of radially extending flutes 126, a pair of opposing chamber sidewalls 136a-c, and a corresponding portion of the roller base wall 134.

According to certain embodiments, first and second chamber sidewalls 136a, 136b can also define first and second outer sidewalls 138a, 138b of the meter 104 and/or the roller 124. Additionally, or alternatively, as seen in at least Figure 3, at least one, intermediate chamber sidewall 136c can be positioned between the first and second chamber sidewalls 136a, 136b so that the meter 104 has two or more columns 142a, 142b of chambers 138. Further, as seen in Figure 3, the flutes 126 in a first column 142a can be offset from the flutes 126 in another, second column 142b such that the chambers 138 in the different columns 142a, 142b are not in alignment, or are offset, with respect to each other.

Thus, in the exemplary embodiment, the chambers 138 in the first column 142a can be partially defined by at least the first chamber sidewall 136a, the intermediate sidewall 136c, the associated adjacent pair of flutes 126, and a portion of the roller base wall 134. Similarly, in the exemplary embodiment, the chambers 138 in the second column 142b can be partially defined by at least the second chamber sidewall 136b, the intermediate chamber sidewall 136c, the associated adjacent pair of flutes 126, and a portion of the roller base wall 134.

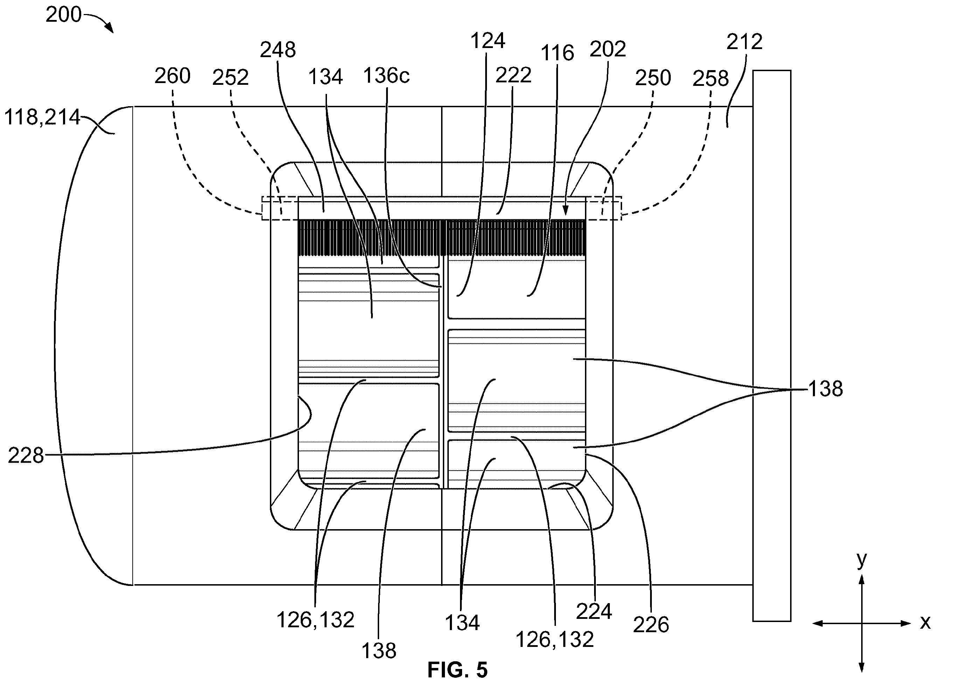

Each of the plurality of chambers 138 can include a radially distal opening 144 (Figure 5) through which commodity can enter and exit from the corresponding chamber 138 as the roller 124 rotates. The opening 144 of each chamber 138 can be generally defined by the apexes 132 that linearly extend along the corresponding pair of generally adjacent or sequential flutes 126 that define the chamber 138, as well as the adjacent upper portion 146 of the associated pair of chamber sidewalls 136a-c, as discussed above. Additionally, a distance between the opening 144 of the chamber 138 and the corresponding portion of the roller base wall 134 can generally define a depth or height of the chamber 138. As discussed below, the depth or height of the chamber 138 can be varied for different commodities, including, for example, different types seeds. Thus, for at least certain seeds, the chambers 138 of the roller 124 utilized in the metering one type of seed can have a depth that can be different, including shallower or smaller, than a depth of the chambers 138 of the rollers 124 used in metering one or more other types of seeds, among other commodities.

Commodity positioned at the inlet 148 of the roller housing 118 may fall by gravity into one or more of the chambers 138 of the rotating roller 124 that, at least at that time, is/are generally aligned with the inlet 148 roller housing 118 at a location at which to receive the commodity through the opening 144 and into the chamber 138. As the roller 124 continues rotating, the chamber 138 containing the commodity rotates away from the inlet 148 of the roller housing 118 about the axis 108 and generally towards the outlet 150 of the roller housing 118. As the chamber 138 containing the commodity continues rotating toward the outlet 150, the chamber 138 can reach a rotational position at which the commodity in the chamber 138 can fall, via at least gravitational and/or radial forces, out of the chamber 138 and through the outlet 150 of the roller housing 118. Accordingly, the commodity can be distributed in a metered fashion from the inlet 148 to the outlet 150 of the roller housing 118 based on the rotation speed of the roller 124 and/or the size, including depth, of the chambers 138.

The rotational speed of the roller 124 may be dictated by the controller 110, and, moreover, operation of an actuator and/or transmission system that can be controlled via one or more signals generated by the controller 110. A variety of types of devices can be utilized as the actuator, including, for example, an electric, pneumatic, or hydraulic motor, among other types of actuators that can provide power for the rotational displacement of the roller 124. The illustrated roller 124 of the meter 200 can have an orifice sized to receive placement of a coupling 206 that is coupled to a drive shaft 208 such that rotational power provided to the drive shaft 208 via operation of the actuator can be transmitted to the roller 124. In the illustrated embodiment, the roller 124 and the coupling 206 can be coupled together via a splined or keyed coupling, among other types of couplings, and the drive shaft 208 can similarly be coupled to the coupling 206 via a spline or keyed coupling, among other types of couplings.

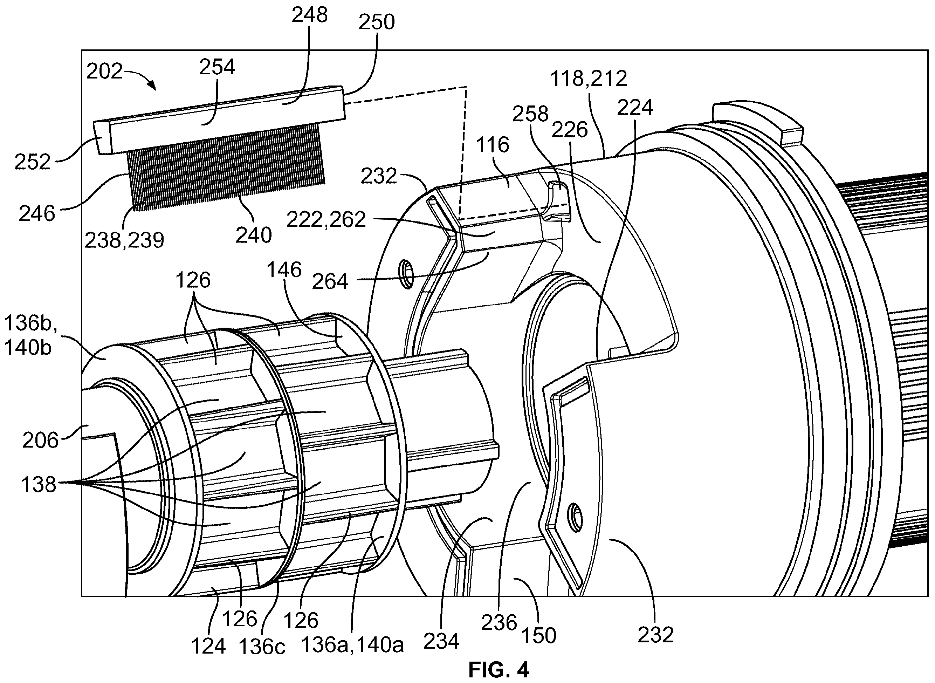

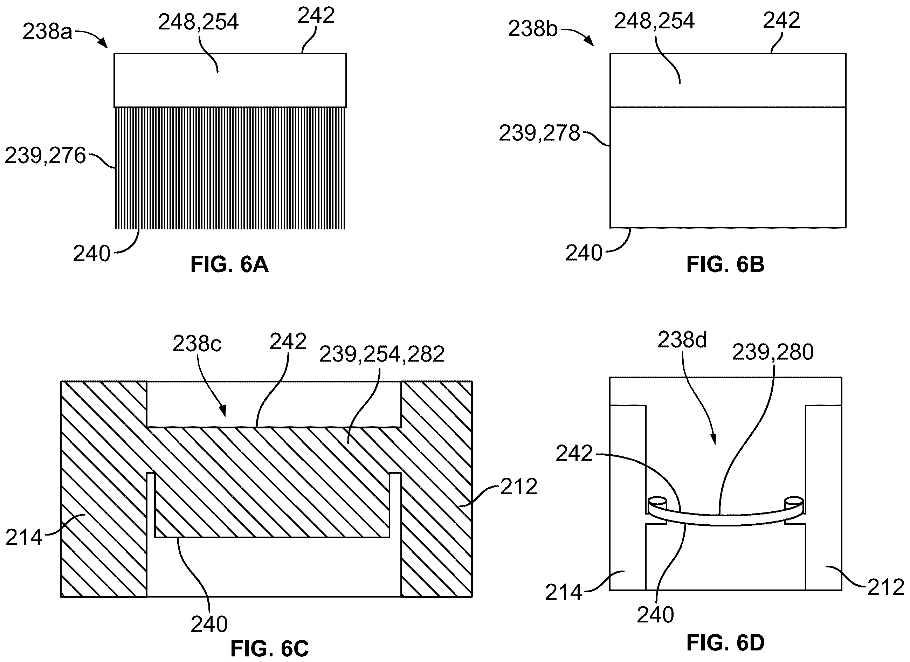

The illustrated exemplary roller housing 118 shown in at least Figure 3 can include a first body section 212 and a second body section 214 that can be coupled together to form the roller housing 118. The first and second body sections 212, 214 can be coupled together in a variety of different manners, including, for example, via use of one or more mechanical fasters 216, including, but not limited to, bolts, screws, and pins, among other manners of coupling or attachment. As illustrated, each of the first and second body sections 212, 214 can define at least a portion of the inlet 116 and outlet 150 of the roller housing 118. Moreover, as seen in at least Figures 4 and 6, each of first and second body sections 212, 214 can include hub segments 232 that can each define a portion of the inlet 116 and outlet 150 of the roller housing 118, or, alternatively, through which the inlet 116 and outlet 150 can extend.

As seen by at least Figure 5, the inlet 116 of the roller housing 118 can extend in a lateral direction (as generally indicated by the "y" direction in Figure 5) between a front wall 222 and a rear wall 224, as well as in a longitudinal direction (as generally indicate by the "x" direction in Figure 5) between opposing first and second sidewalls 226, 228 in the first and second body sections 212, 214. According to certain embodiments, either or both the front wall 222 and the rear wall 224 can include an inclined portion 230 that can assist in guiding commodity toward the roller 124. Additionally, as seen in at least Figure 7, in the illustrated embodiment, as the roller 124 is rotated, commodity that has been received in a chamber(s) 138 of the roller 124 that is presently adjacent to the inlet 116 of the roller housing 118 is rotated toward the front wall 222 of the inlet 116. Similarly, following a release of the commodity from the chamber 138 when the chamber 138 is positioned at or near the outlet 150, the roller 124 continues to rotate such that recently emptied chamber 138 is rotated in a direction generally toward, and eventually past, the rear wall 224 of the inlet 116, thereby again exposing the emptied chamber 138 for a reloading of commodity that may be present in, or is passing through the inlet 116 as the roller 124 continues to rotate.

As the chamber 138 containing commodity is rotated toward a position at which the chamber 138 exits, or otherwise moves away from, the inlet 116 of the roller housing 118, commodity can be piled in the chamber 138. Such piling of commodity in the chamber 138 can at least occasionally include the pile of commodity extending above the apexes 132 of the flutes 126 that define at least a portion of the chamber 138. In such situations, as discussed below, the meter 200 can include a sweep assembly 202, 202' that can be utilized to control at least a height or amount of the commodity in a chamber 138, that is displaced with the rotation of the roller 124 away from the inlet 116. Additionally, or alternatively, the sweep assembly 202, 202' can provide a barrier that can restrict commodity from being moving out of the inlet 116 with the rotational displacement of the roller 124. By controlling the height or amount of commodity, or otherwise restricting the passage of commodity away from the inlet 116 with the rotation of the roller 124, the sweep assembly 202, 202' can assist in preventing at least potential wedging of commodity between flutes 126 of the roller 124 and the roller housing 118.

In the illustrated embodiment, when the first and second body sections 212, 214 are coupled together, and the hub segments 232 of the first and second body sections 212, 214 abut, or are otherwise generally adjacent to, each other such an inner wall(s) 234 of the hub segments 232 of the first and second body sections 212, 214 generally define a housing aperture 236. The housing aperture 236 can have a size, including, for example, a diameter and length, that can accommodate rotation of the roller 124 about the axis 108 within the housing aperture 236. According to certain embodiments, the housing aperture 236 can have a diameter that is slightly larger than the flute diameter (*ϕF_{OD}*) and/or outer diameter (*ϕR_{OD}*) of the roller 124 such that the housing aperture 236 provides a minimal amount of clearance for the rotation of the roller 124 within the housing aperture 236. Such a clearance can be sized to prevent contact between the flutes 126, and in particular the apexes 132 of the flutes 126, among other portions of the roller 124, and the inner walls 234 of the hub segments 232 as the roller 124 is rotated. According to certain embodiments, the amount of clearance between the flute diameter (*ϕF_{OD}*) and/or outer diameter (*ϕR_{OD}*) of the roller 124 and the housing aperture 236 can be less than a width or thickness of the commodity, including seed, that is to be metered via the meter 200.

In certain instances, commodity received at the inlet 116 of the roller housing 118 into a chamber 138 of the roller 124 can be seated at a position above the roller 124. Moreover, with a chamber 138 positioned adjacent to the inlet 116 of the roller housing 118, the commodity can extend to an elevated height that is above, or higher than, the apexes 132 of the flutes 126 of the chamber 138. In such instances, as the roller 124 rotates, the received commodity in the chamber 138 can be rotated away from the inlet 116 of the roller housing 118 and to a position at which the commodity is adjacent to the inner wall 234 that defines at least a portion of the housing aperture 236. In such situations, engagement between the commodity and the inner wall 234 can result in the commodity can becoming wedged between the apex 132 of a flute 126 and the inner wall 234. With such wedging of the commodity between the flute 126 and the inner wall 234 can result in a compressive force being exerted against the corresponding flute 126 that can deform, break, or otherwise damage the flute 126. Such damage to the flute 126 can adversely impact the operation of the roller 124. Moreover, such damage to the flute 126 can alter the size and/or shape of one or more of the chambers 138, which can adversely impact the metering that is to be attained via the size of the chamber(s) 138. Further, such wedging of the commodity can damage the commodity, including the associated seed, thereby resulting in a waste of commodity. Additionally, such wedging, and associated resistance to the rotation of the roller 124 can potentially create other damage associated with the stress or strain placed on the system, including, but not limited to, the force to be exerted by the actuator to rotate the roller 124 to overcome the additional resistance created by the wedged commodity, as well as potential related damage to the couplings between the roller 124 and the coupling 206, and/or between the coupling 206 and the drive shaft 208.

According to certain embodiments, the meter 200 can include a sweep assembly 202 that is configured to at least assist in controlling the height of the commodity in a chamber 138 as the chamber 138 is rotated away from the inlet 116 of the roller housing 118. Additionally, or alternatively, the sweep assembly 202 can be configured to provide a barrier or restriction against a displacement of at least some commodity away from the inlet 116 with the rotation of the roller 124. Moreover, the sweep assembly 202 is configured to control a height or movement of commodity within a chamber 138 or inlet 116 of the roller housing 118 in a manner that can at least assist in preventing commodity from being positioned, downstream of the inlet 116, to become wedged between a flute 126 and the inner wall 234 of the adjacent hub segment 232.

According to certain embodiments, the sweep assembly 202 include a sweeper body 238 having a sweeper portion 239. The sweeper portion 239 can have a compliant configuration such that the sweeper portion 239 deforms, bends, deflects, flexes, or otherwise partially moves in response to contact with commodity, or a movement of commodity, at least as the commodity is displaced with the displacement of the roller 124. Additionally, according to certain embodiments, the compliant configuration can relate to the sweeper portion 239 having a degree of flexibility such that the sweeper portion 239 can assist in sweeping, pushing, or otherwise resisting movement of at least a portion of the commodity toward the front wall 222 of the inlet 116 of the roller housing 118, and which can assist in pushing commodity toward other, downstream chambers 138 of the roller 124.

The compliant configuration of the sweeper portion 239 can be attained in a variety of manners. For example, according to certain embodiments, the compliant configuration of the sweeper portion 239 can be based on constructing the sweeper portion 239 from a compliant material, including, for example, one or more flexible or non-rigid materials and/or an arrangement of such materials. For example, as demonstrated by Figure 6A, according to certain embodiments, the sweeper portion 239 can be a collection of compliant fibers or bodies 276 that are constructed from rubber or plastic, or a compliant portion of a brush, including, for example, a plurality of natural and/or synthetic bristles, among other materials, or combinations of materials. Further, as seen in Figure 6B, according to certain embodiments, the sweeper portion 239 can be one or more deformable curtains 278. Alternatively, the sweeper portion 239 can be a bendable body that is arranged to provide compliance or flexibility upon contact with commodity. For example, according to certain embodiments, as seen in Figure 6D, the sweeper portion 239 can be a metallic or plastic wire, strip, cord, or line (generally referred to as a strip 280) that is arranged in an non-taut manner, including having a degree of slack or looseness, so as to be at least partially compliant, including, for example, flexible, in response to a force exerted against the sweeper portion 239 by at least moving commodity.

The sweeper body 238 can have a variety of shapes and sizes. According to the illustrated embodiment, the sweeper body 238 extends vertically from a first end 240 to a second end 242 of the sweeper body 238, and longitudinally (as generally indicated by the "x" direction in Figure 5) across the inlet 116 between the first and second body sections 212, 214. Further, the sweeper body 238 can have a length between the first and second ends 240, 242 that generally corresponds to a corresponding width of the roller 124 between the first and second outer walls 140a, 140b of the roller 124. Additionally, the sweeper body 238 can have a thickness in a lateral direction (as generally indicated by the "y" direction in Figure 5) between a front side 244 and an opposing rear side 246 of the sweeper body 238 that can accommodate compliancy, including, for example, flexibility, bending, or deformation, of the sweeper portion 239 while also providing the sweeper portion 239 with sufficient resiliency to provide a compliant barrier that restricts the height of the commodity moving with the roller 124 out of the inlet 116, including, for example, the height of commodity in a chamber 138 as the chamber moves out of, or away from, the inlet 116. Further, while Figure 7 illustrates the sweeper body 238 having a generally rectangular cross-sectional shape, the sweeper body 238 can have a variety of other cross-sectional shapes, including, but not limited to round, oval, and non-round cross-sectional shapes, among others.

According to certain embodiments, the sweeper body 238 can include a base portion 248 to which the sweeper portion 239 is coupled. Further, according to certain embodiments, including embodiments in which the sweeper portion 239 comprises a plurality of compliant bodies 276, such as, for example, bristles, among other types of compliant bodies 276, the base portion 248 can provide a ferrule or bracket that can be adjoined to the sweeper portion 239, or be used to maintain a position or collection of the compliant bodies 276. Additionally, according to certain embodiments, the base portion 248 and the sweeper portion 239 can be different items or materials that are couped together at the base portion 248. Alternatively, according to other embodiments, the base portion 248 and the sweeper portion 239 can be part of the same unitary, monolithic structure.

According to certain embodiments, the base portion 248 can be configured to at least assist in coupling the sweep assembly 202 to the roller housing 118, including to either or both the first and second body sections 212, 214 of the roller housing 118. For example, according to certain embodiments, the base portion 248 can longitudinally extend between opposing first and second ends 250, 252, as well as laterally between a front wall 254 and an opposing rear wall (not shown). According to the embodiment shown in at least Figures 4 and 5, the first end 250 of the base portion 248 can have a configuration that is configured to be received in a mating first orifice 258 in the first body section 212 of the roller housing 118. Similarly, the second end 252 of the base portion 248 can have a similar configuration in which the second end 252 of the base portion 248 is configured to be received in a mating second orifice 260 in the second body section 214 of the roller housing 118. Thus, for example, the first and second ends 250, 252 of the base portion 248 can have generally rectangular cross-sectional shapes, among other shapes, that can be received within the first and second orifices 258, 260, respectively, which can also have generally similar rectangular cross-sectional shapes, among other shapes. Additionally, the base portion 248 can have a longitudinal length between the first and second ends 250, 252, and the first and second orifices 258, 260 can extend to a depth in the longitudinal direction in the associated first and second body sections 212, 214 that can assist in retaining the sweep assembly 202 in a mating engagement with the roller housing 118 at least when the first and second body sections 212, 214 are securely coupled together. Alternatively, according to other embodiments, the base portion 248 and sweeper body 239 can be part of a monolithic structure that forms a living hinge 282 (Figure 6C) that is coupled to, or part of, either or both the first and second body sections 212, 214. As previously mentioned, in the illustrated embodiment, as the roller 124 is rotated an empty chamber 138 of the roller 124 is rotated toward, and past, the rear wall 224 of the inlet 116, thereby exposing that chamber 138 to commodity that may be present, or passing through, the inlet 116 of the roller housing 118. As the chamber 138 receives commodity, the chamber 138 continues to rotate toward the front wall 222 of the inlet 116. According to the illustrated embodiment, the sweep assembly 202 can be positioned in, including extend into, the inlet 116 such that commodity piled in, or above, the chamber 138 at a height above the apexes 132 of the flutes 126 encounter the sweeper portion 239 of the sweeper body 238 before reaching the front wall 222 of the inlet 116. Thus, for example, the sweeper body 238 can be positioned adjacent to an end 262 of a hub segment 232 that may define at least a portion of the front wall 222 of the inlet 116 of either or both the first and second body sections 212, 214 of the roller housing 118, and/or be positioned adjacent to an end 264 of the associated inner wall(s) 234 of the hub segments 232.

Additionally, the first end 240 of the sweeper body 238 can be positioned at a height at which the first end 240 of the sweeper body 238, and, moreover, the sweeper portion 239, contacts, or, alternatively, is slightly above, the apexes 132 of the flutes 126 as the flutes 126 rotate past the sweeper portion 239. Thus, the first end 240 of the sweeper body 238, and moreover of the sweeper portion 239, can be positioned along, or slightly above, the flute diameter (*ϕF_{OD}*) about which the plurality apexes 132 of the flutes 126 extend or define. Such positioning of the sweeper body 238 upstream, and adjacent to, the front wall 222 of the inlet 116, as well as the positioning of the first end 240 of the sweeper body 238 at least relative to the apexes 132 of the passing flutes 126 can assist in controlling the height of the pile of commodity in the chamber 138 at least as the chamber 138 containing the commodity passes out of the inlet 116 and is rotated adjacent to the inner wall(s) 234 of the hub segments 232 as the commodity contained therein is displaced toward the outlet 150 of the roller housing 118. Moreover, such positioning of the sweeper body 238 can assist the sweeper portion 239 of the sweeper body 238 in providing a barrier, curtain, or obstruction, that can sweep commodity that exceeds a certain height threshold to another portion of the chamber 138 and/or to another, downstream chamber 138 of the roller 124. Such control of the height of the pile of commodity being transported by the chamber 138 as the chamber 138 exits the inlet 116 of the roller housing 118 can at least assist in preventing the commodity from becoming wedged between the adjacent inner wall 234 of the hub segment 232 and a flute 126. Additionally, as discussed below, such positioning of the sweeper body 238 can provide a barrier that can prevent at least commodity at certain locations within the inlet 116 of the roller housing 118 from being displaced into the housing aperture 236 with the displacement of the roller 124 so as to prevent the commodity from being wedged between a flute 126 of the roller 124 and the inner wall 234 of the roller housing 118, as previously discussed.

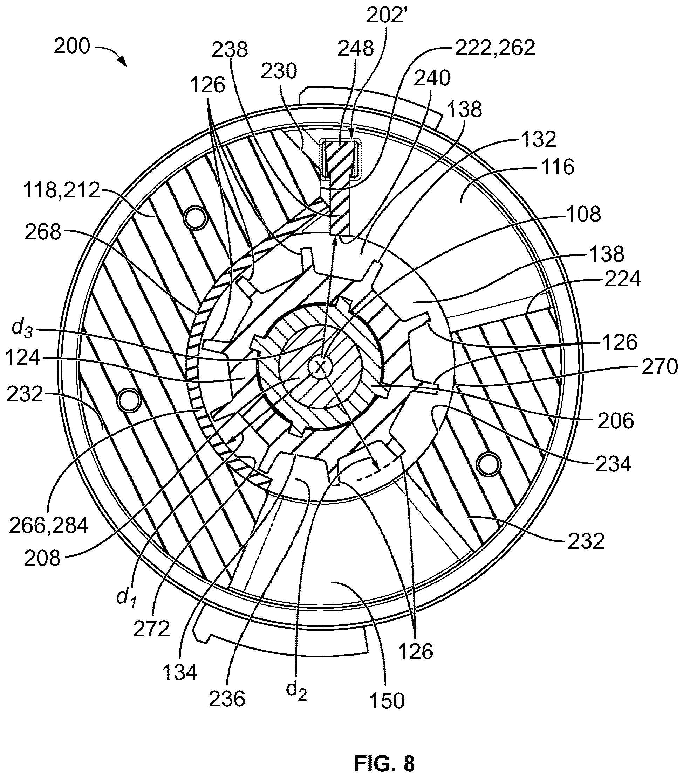

Figure 8 illustrates an elevated perspective section view of an alternative embodiment of a sweep assembly 202' for the meter 200 shown in Figure 3. The illustrated sweep assembly 202' can include a sweeper body 238 similar to that discussed above with respect to at least Figures 3-7. Additionally, the sweep assembly 202' can also include an aperture liner 266 that can extend along a portion of the inner wall 234, and more specifically, along a first portion 268 of the inner wall 234 that, in a direction of rotation of the roller 124, extends from the inlet 116 to the outlet 150 of the roller housing 118. Further, the aperture liner 266 can have a width in a longitudinal direction (as generally indicate by the "x" direction in Figure 5) about the first portion 268 of the inner wall 234 such that the width of the aperture liner 266 is similar to a width of the roller 124, including, for example, a width between the first and second outer walls 140a, 140b of the roller 124. As also seen, a second portion 270 of the inner wall 234 that extends, in the direction of rotation of the roller 124, from the outlet 150 to the inlet 116 of the roller housing 118 may not include the aperture liner 266. Further, the aperture liner 266 can be coupled to the adjacent portion of the inner wall 234 in a variety of manners, including, for example, via an adhesive and/or one or more mechanical fasteners, including, for example, screws, bolts, or pins, among others. Such a construction can accommodate removal and replacement, if necessary, of the aperture liner 266, including, for example, in response to wearing of the aperture liner 266.

The aperture liner 266 can include an extended compliant portion 284 that radially inwardly extends from, or from around, the adjacent first portion 268 of the inner wall 234. Thus, for example, unlike the generally stiff or hard inner wall 234 that generally defines the housing aperture 236, the aperture liner 266 can be constructed from a compliant material(s) and/or be a collection of compliant body(ies). For example, the compliant portion 284 of the aperture liner 266 can have a construction, similar to the compliant fibers or bodies 276 discussed above with respect to the sweeper portion 239 of the sweeper body 238, including a plurality of compliant fibers or bodies that is/are constructed from rubber or plastic, as well as a combinations thereof, among other materials. Further, according to certain embodiments, the compliant portion 284 of the aperture liner 266 can provide an extended deformable cushion that can deform in response to an outwardly directed force being exerted against the compliant portion 284, including, for example, by commodity in the housing aperture 236.

As seen in at least Figure 8, the aperture liner 266 can be positioned between an adjacent portion of the inner wall 234 and the apex 132 or distal ends 128 of the plurality of flutes 126 that rotate past the aperture liner 266. Thus, an inner surface 272 of the aperture liner 266 can be positioned to be adjacent to the apex 132 or distal ends 128 of the plurality of flutes 126. Accordingly, an inner surface 272 of the aperture liner 266 can, for example, be separated from the rotation axis 108 by a first distance or radius (as generally indicated by *"d₁"* in Figure 8), while the apex 132 or distal ends 128 of the plurality of flutes 126 can be separated from the rotation axis 108 by a second distance or radius (as generally indicated by *"d₂"* in Figure 8), the first distance (*d₁*) being the same, if not slightly greater, than the second distance (*d₂*). Additionally, sweeper body 238 can be configured, including positioned, such that the first end 240 of the sweeper body 238 is separated from the rotation axis 108 by third distance or radius (as generally indicated by *"d₃"* in Figure 8), the third distance (*d₃*) being the same, if not slightly less than, the first distance (*d₁*) separating the inner surface 272 of the aperture liner 266 from the rotation axis 108.

According to such an embodiment, the first end 240 of the sweeper body 238 is positioned to minimize contact between commodity entering at least the housing aperture 238 and the aperture liner 266. However, as the roller 116 rotates, commodity positioned in the chambers 138 can experience forces that can urge a movement of the commodity in a direction radially away from the rotation axis 108 of the roller 116, thereby facilitating contact between the commodity and the aperture liner 266. However, to the extent commodity in the chambers 138 do come into contact with the aperture liner 266, the compliant nature of the aperture liner 266 can provide a deformable surface or cushion for the commodity, and prevent the commodity from contacting the relatively hard and stiff adjacent inner wall 234 that defines the housing aperture 236, thereby preventing potential damage to the commodity. Such a compliant surface or cushion provided by the aperture liner 266 can also minimize potentially commodity damaging compressive forces that can be exerted on the commodity, including compressive forces due to height differences of a pile of commodity in the chamber 138 and the distance between the roller base wall 134 and the adjacent inner wall 234 of the housing aperture 236. Additionally, such cushioning or compliance of the aperture liner 266 can further reduce compression that can be associated with commodity being wedged between a flute 126 and the adjacent inner wall 234 of the housing aperture 236.

## Claims

1. A volumetric meter (104, 200) for metering an agricultural commodity, the volumetric meter (104, 200) comprising:
a roller housing (118) having an inlet (116), an outlet (150), and a housing aperture (236), the housing aperture (236) being in fluid communication with the inlet (116) and the outlet (150);
a roller (124) positioned in the housing aperture (236), the roller (124) having a plurality of flutes (126) and a plurality of chambers (138), each flute (126) of the plurality of flutes (126) radially outwardly extends to an apex (132) of the flute (126), at least a pair of flutes (126) defining at least a portion of a chamber (138) of the plurality of chambers (138), the plurality of chambers (138) configured for receipt of at least a portion of the agricultural commodity from the inlet (116) of the roller housing (118); and
a sweep assembly (202, 202') comprising a sweeper body (238) positioned at least in the inlet (116) of the roller housing (118), the sweeper body (238) having a sweeper portion (239) having a compliant configuration that is at least partially displaceable by a force exerted against the sweeper portion (239) by at least a portion of the agricultural commodity in the inlet (116) of the roller housing (118).

2. The volumetric meter (104, 200) of claim 1, wherein the sweeper portion (239) is positioned adjacent to an apex diameter that is defined by the apex (132) of each flute (126) of the plurality of flutes (126).

3. The volumetric meter (104, 200) of claim 1 or 2, wherein the sweeper portion (239) comprises a plurality of compliant bodies.

4. The volumetric meter (104, 200) of one of the claims 1 to 3, wherein the sweeper body (238) is positioned adjacent to a front wall of the inlet (116) to provide a barrier against at least some of the agricultural commodity being displaced from the inlet (116) to the housing aperture (236) with the rotation of the roller (124).

5. The volumetric meter (104, 200) of one of the claims 1 to 4, wherein the sweeper body (238) further comprises a base portion (248) coupled to the sweeper body (238), the base portion (248) configured for selective attachment of the sweep assembly (202, 202') to the roller housing (118).

6. The volumetric meter (104, 200) of one of the claims 1 to 5, wherein the sweeper body (238) is a living hinge (282).

7. The volumetric meter (104, 200) of one of the claims 1 to 5, wherein the sweeper body (238) is a non-taut strip (280) that extends across a portion of the inlet (116) adjacent to the housing aperture (236) and is coupled to the roller housing (118).

8. The volumetric meter (104, 200) of one of the claims 1 to 7, wherein the sweep assembly (202, 202') further comprises an aperture liner (266) having a compliant portion, the compliant portion configured for displacement of at least a portion of the compliant portion in response to a force exerted against the compliant portion by at least some of the agricultural commodity in the housing aperture (236), wherein the aperture liner (266) extends along a portion of the roller housing (118) that defines at least a portion of the housing aperture (236).

9. The volumetric meter (104, 200) of claim 8, wherein the compliant portion extends radially inwardly toward the roller (124) and is positioned to be adjacent to at least the apex (132) of one or more of the plurality of flutes (126) as the roller (124) is rotated within the housing aperture (236).

10. The volumetric meter (104, 200) of claim 8 or 9, wherein the aperture liner (266) extends from the inlet (116) to the outlet (150) of the roller housing (118) in a direction of rotation of the roller (124), but does not extend from the outlet (150) to the inlet (116) in the direction of rotation of the roller (124).

11. The volumetric meter (104, 200) of one of the claims 1 to 10, wherein:
the roller (124) is housed in the housing aperture (236) at a location at which at least a portion of the agricultural commodity can be transferred through the inlet (116) of the roller housing (118) to one or more chambers (138) of the plurality of chambers (138) via at least a gravitational force;
the sweeper body (238) being further positioned adjacent to the housing aperture (236), the compliant configuration of the sweeper portion (239) being configured for at least one of being displaced, bent, deflected, or deformed in response to the force exerted against the sweeper portion (239) in the inlet (116) of the roller housing (118) as the portion of the agricultural commodity transferred into the one or more chambers (138) is displaced with a rotation of the roller (124) within the housing aperture (236).

12. The volumetric meter (104, 200) of one of the claims 1 to 11, wherein the sweeper body (238) is positioned to limit a height or a quantity of the portion of the agricultural commodity transferred into the one or more chambers (138) that is displaced out of the inlet (116) of the roller housing (118) with the rotation of the roller (124).

13. The volumetric meter (104, 200) of one of the claims 1 to 12, wherein the sweeper portion (239) is positioned adjacent to an apex diameter that is defined by the apex (132) of each flute (126) of the plurality of flutes (126).

14. The volumetric meter (104, 200) one of the claims 1 to 13, wherein the sweeper body (238) further comprises a base portion (248) coupled to the sweeper body (238), the base portion (248) configured for selective attachment of the sweep assembly (202, 202') to the roller housing (118).

15. The volumetric meter (104, 200) of one of the claims 1 to 14, wherein the sweep assembly (202, 202') further comprises an aperture liner (266) having a compliant portion, wherein the aperture liner (266) extends along a portion of the roller housing (118) that defines at least a portion of the housing aperture (236), the compliant portion extending radially inwardly toward the roller (124) and is positioned to be adjacent to at least an apex (132) of one or more of the plurality of flutes (126) as the roller (124) is rotated within the housing aperture (236).
